# DEMANDE DE BREVET EUROPEEN

(11) **EP 1 072 183 A1**
(43) Date de publication de la demande: **31.01.2001**
(21) Numéro de dépôt: 00402164.8
(22) Date de dépôt: 27.07.2000
(51) Int. Cl.: A01D 23/02

(54) **Dispositif pour effeuiller des végétaux tels que des betteraves**

(30) Priorité: 30.07.1999 FR 9909904
(71) Demandeur: ETABLISSEMENTS JEAN MOREAU, 59159 Marcoing (FR)
(72) Inventeur: Jette, Etienne Hubert Jean-Marie, 59159 Marcoing (FR)
(74) Mandataire: Colas, Jean-Pierre

(57) **Abrégé**

Le dispositif comporte un rotor (1) muni de couteaux (6₁,6₂) présentant chacun un bord de coupe (7) écarté de l'axe (X) du rotor (1) d'une distance prédéterminée pour couper les feuilles (4) des végétaux au niveau de leurs pétioles. Suivant l'invention, le rotor (1) comprend en outre des moyens de râpe (13₁,13₂) associés chacun à un couteau (6₁,6₂) et présentant une surface active (15) écartée de l'axe (X) du rotor (1) d'une deuxième distance prédéterminée supérieure à la première, la surface active étant agencée en aval du bord de coupe (7) du couteau (6₁,6₂) associé, dans le sens de rotation (F₂) du rotor (1), de manière à passer sur un tubercule effeuillé immédiatement après le bord de coupe (7) du couteau (6₁,6₂) associé, pour enlever par râpage les restes (4a) des pétioles des feuilles demeurant sur le tubercule après la coupe.

## Description

La présente invention est relative à un dispositif pour effeuiller des végétaux, tels que des betteraves, cultivés en lignes et pourvus d'une touffe de feuilles s'étendant au-dessus d'un tubercule en saillie sur le sol, et, plus particulièrement, à un tel dispositif comportant un rotor d'axe horizontal déplacé au-dessus du sol, parallèlement aux lignes de végétaux, le rotor étant muni d'une pluralité de couteaux présentant chacun un bord de coupe écarté de l'axe du rotor d'une distance prédéterminée pour couper lesdites feuilles au niveau de leurs pétioles.

On connaît de tels dispositifs, munis de couteaux, ou fléaux, rotatifs, notamment des documents FR 2 450 042 et FR 2 622 764, ce dernier étant au nom de la demanderesse.

Après la coupe des feuilles, il reste sur le tubercule des restes des pétioles des feuilles, les couteaux passant au-dessus du tubercule de manière à ne pas attaquer celui-ci, ce qui provoquerait une perte de poids de matière utile livrée, dans le cas des betteraves à sucre, à une usine équipée pour en extraire le sucre.

Il convient cependant de fournir à celle-ci une matière première aussi propre que possible et, notamment, débarrassée de toute tare "terre" ou "feuilles". La présence de telles tares oblige en effet à prévoir un nettoyage mécanisé en usine, générateur de boues à décanter, polluantes et d'odeur nauséabonde.

On a donc conçu des moyens de "scalpage" pour débarrasser les tubercules du reste de pétioles qu'ils portent après la coupe, ces moyens prenant la forme de lames métalliques tranchantes traînées sur le sol par le dispositif, en aval du rotor de coupe, de manière à passer sur la partie du tubercule en saillie au-dessus du sol et à en sectionner le sommet. Ces moyens de "scalpage" sont évidemment inefficaces quand ils passent sur un tubercule entièrement enterré ou protégé par un tubercule placé en arrière et dépassant largement du sol. Il présente en outre l'inconvénient de supprimer aussi une partie du collet de la plante, alors que ce collet comprend de la matière utile, car contenant du sucre.

On connaît encore des dispositifs d'effeuillage comprenant, sous un même carter, plusieurs rotors successifs, l'un au moins constituant un rotor de coupe, et un autre au moins un rotor nettoyeur. De tels dispositifs sont encombrants et coûteux, du fait de la multiplication des rotors dans le carter.

La présente invention a pour but de réaliser un dispositif pour effeuiller des végétaux, tels que des betteraves, qui ne présente pas les inconvénients des dispositifs connus de la technique antérieure et, en particulier, qui assure un enlèvement complet des feuilles des tubercules à récolter, sans perte de matière utile, le dispositif présentant un faible encombrement et un minimum de pièces de manière à pouvoir être réalisé à prix contenu.

On atteint ce but de l'invention, ainsi que d'autres qui apparaîtront à la lecture de la description qui va suivre, avec un dispositif d'effeuillage comportant un rotor d'axe horizontal déplacé au-dessus du sol parallèlement aux lignes de végétaux à effeuiller, le rotor étant muni d'une pluralité de couteaux présentant chacun un bord de coupe écarté de l'axe du rotor d'une distance prédéterminée pour couper les feuilles des tubercules au niveau de leurs pétioles, ledit rotor comprenant en outre des battes de râpage associées chacune à un couteau et présentant une surface active écartée dudit axe du rotor d'une deuxième distance prédéterminée supérieure à la première, ladite surface active étant agencée en aval du bord de coupe du couteau associé, dans le sens de rotation dudit rotor, de manière à passer sur un tubercule effeuillé immédiatement après le bord de coupe du couteau associé, pour enlever par râpage les restes des pétioles desdites feuilles demeurant sur le tubercule après la coupe, chacune desdites battes de râpage comprenant un manche incliné sur sa surface active de manière à être orienté sensiblement radialement alors que ladite surface est tangentielle, quand le rotor tourne.

Comme on le verra plus loin en détail, l'invention permet de débarrasser complètement les tubercules à effeuiller de toute trace de "verts", sans "scalpage" du tubercule, et donc sans perte de matière utile, et ceci avec un dispositif d'effeuillage compact et de prix de fabrication réduit.

Suivant d'autres caractéristiques de la présente invention, les battes de râpage sont réalisées en un matériau élastique. La surface active de la batte est garnie d'une distribution de protubérances. Cette distribution comprend des protubérances réalisées en un matériau élastique et/ou des protubérance réalisées en un matériau métallique.

La présente invention fournit aussi un outil de coupe formant partie du dispositif suivant l'invention, cet outil de coupe comprenant un couteau de coupe et une batte de râpage présentant tous deux un manche, un moyen d'assemblage desdits manches et des moyens pour monter à rotation lesdits moyens d'assemblage sur le rotor.

D'autres caractéristiques et avantages de la présente invention apparaîtront à la lecture de la description qui va suivre et à l'examen du dessin annexé dans lequel :
- les figures 1 et 2 sont des vues partielles, en coupe transversale et en coupe axiale respectivement, du dispositif d'effeuillage suivant la présente invention,
- les figures 3 à 5 représentent un des outils de coupe qui équipe le dispositif suivant l'invention, suivant trois points de vue différents, et
- les figures 6 à 8 représentent 3 variantes de l'outil de coupe des figures 3 à 5.

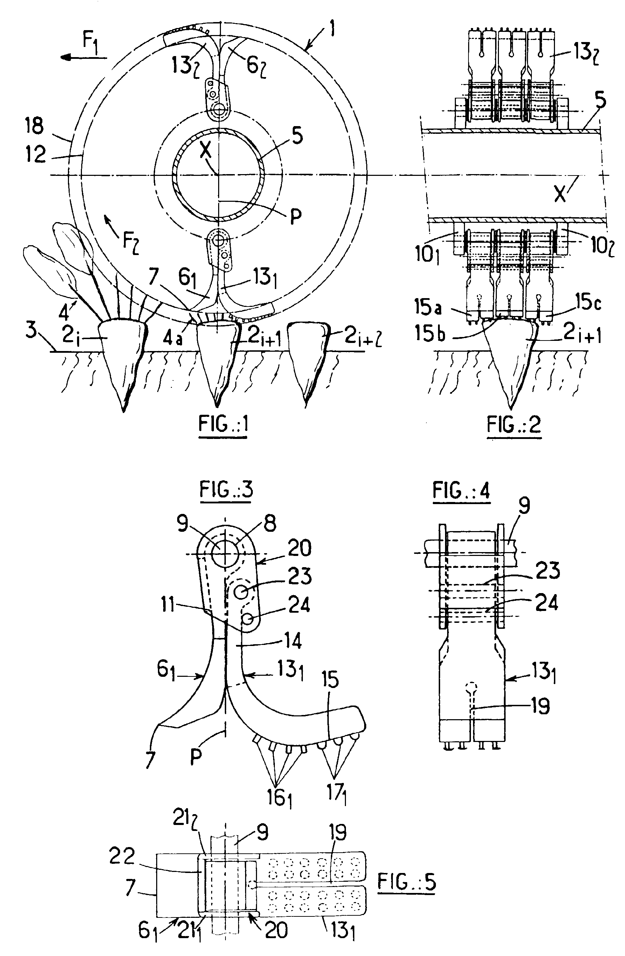

On se réfère à la figure 1 du dessin annexé où l'on a représenté schématiquement le rotor 1 du dispositif d'effeuillage suivant la présente invention, placé classiquement sous un capot ou carter (non représenté) comprenant des moyens de support de ce rotor 1, propre à permettre de déplacer celui-ci, à une hauteur prédéterminée, au-dessus d'un champ de végétaux à tubercules tels que 2ᵢ,2ᵢ₊₁,2ᵢ₊₂, .... des betteraves à sucre par exemple, cultivés en lignes, chacun des tubercules s'étend partiellement en saillie au-dessus du sol 3 et portant une touffe de feuilles telle que celle globalement repérée 4. Le rotor est ainsi déplacé dans le sens de la flèche F₁, parallèlement aux lignes de tubercules.

Le rotor comprend un arbre 5 sur lequel sont montés des couteaux de coupe tels que 6₁,6₂, etc... Ces couteaux sont distribués régulièrement, d'une part dans un même plan perpendiculaire à l'arbre 5, comme c'est le cas des couteaux 6₁,6₂ et, d'autre part, au long de l'arbre, au niveau des rangs ou lignes de tubercules à effeuiller. Dans un même plan perpendiculaire à l'arbre 5, on peut ainsi disposer deux couteaux ou plus, quatre par exemple.

Comme représenté à la figure 3, le couteau 6₁ représenté à titre d'exemple présente en coupe longitudinale une forme légèrement arquée délimitée, à une extrémité, par un bord de coupe 7 et percé à l'autre extrémité d'un trou 8 dans lequel passe un axe d'articulation 9 de ce couteau sur le rotor 1. Pour ce faire, cet axe 9 est porté par des oreilles 10₁,10₂ soudées ou autrement fixées sur l'arbre 5 du rotor comme représenté à la figure 2, coupe partielle du rotor par un plan axial passant par lesdites oreilles 10₁,10₂.

Quand le rotor 1 tourne à une vitesse relativement grande, de 1 300 tours/mn par exemple, la force centrifuge agissant sur les couteaux 6₁,6₂ tente à placer une partie sensiblement rectiligne 11, ou manche, du couteau dans une position radiale comme représenté à la figure 1. Le sens de rotation du rotor 1 étant repéré par la flèche F₂, les bords de coupe 7 des couteaux 6₁,6₂, ... tournent sur une même trajectoire circulaire 12 de rayon prédéterminé, centrée sur l'axe X du rotor 1, ce rayon étant ajusté pour que ces bords de coupe passent à proximité des tubercules en coupant les touffes de feuilles qu'ils portent au niveau de leurs pétioles, comme illustré schématiquement pour le tubercule 2ᵢ₊₁ de la figure 1. La position du point bas de la trajectoire 12 est évidemment fonction de la hauteur de l'axe X du rotor 1 au-dessus du sol, déterminé par les moyens de support (non représentés) de ce rotor et de son carter sur ce même sol.

Une telle coupe laisse cependant demeurer sur le tubercule la base 4a des pétioles des feuilles, comme cela apparaît sur la figure 1. Il convient d'éliminer ce reste de "verts" de manière que le tubercule arraché et envoyé à l'usine ne comporte que de la matière utile, celle du tubercule, et n'exige alors aucun traitement supplémentaire, générateur de fluides polluants comme on l'a vu plus haut.

Pour ce faire, le rotor du dispositif suivant l'invention comporte des moyens de râpe 13₁,13₂,.... solidaires chacun d'un des couteaux 6₁,6₂,... de manière à tourner avec ce dernier autour de l'axe X du rotor 1. Sur les figures 3 à 5 représentant, à titre d'exemple, en élévation, en vue de côté et en vue de dessus respectivement, un outil de coupe constitué par l'association du couteau 6₁ et du moyen de râpe 13₁, il apparaît que ce moyen 13₁ prend la forme d'une batte cintrée comportant à une extrémité, un manche 14 accolé au manche 11 du couteau 61 et, à l'autre extrémité, une surface active 15 garnie d'une distribution de protubérances globalement repérées 16₁ et 17₁, propres à assurer une fonction de râpage.

Quand le rotor tourne et que la force centrifuge place le couteau 61 et la batte 13₁ dans la position représentée à la figure 1, où leurs manches sont accolés de part et d'autre d'un plan arrière P, la surface active de la batte est sensiblement tangentielle et tourne sur une trajectoire circulaire 18 de rayon prédéterminé, supérieur à celui de la trajectoire 12 du bord de coupe 7 du couteau 6₁.

En outre, comme cela apparaît clairement aux figures 1 et 3, la surface active est située, dans le sens de rotation du rotor 1, en aval du bord de coupe 6₁ et passe donc immédiatement après celui-ci sur l'extrémité débordante d'un tubercule tel que celui repéré 2ᵢ₊₁ à la figure 1.

La différence de rayon des trajectoires 12 et 18 est ajustée pour que le couteau 6₁ coupe les feuilles de ce tubercule à une certaine distance de la base des pétioles de celles-ci, et pour que la surface active 15 de la batte passe ensuite sur le reste des pétioles encore attachées aux tubercules pour les enlever par râpage, laissant le tubercule "chauve" mais intact dans sa matière première.

L'extension tangentielle importante de la surface active de la batte de l'outil suivant l'invention (de l'ordre de 20° par exemple) assure un râpage efficace des tubercules.

Pour obtenir ce résultat, la surface active 12 de la batte doit pouvoir se modeler sur l'extrémité du tubercule quand elle passe au-dessus, sans l'attaquer en profondeur. A cet effet, la batte est réalisée en un matériau souple et élastique, tel qu'un caoutchouc naturel ou synthétique par exemple. Cette souplesse est accrue éventuellement par la présence d'une ou plusieurs fentes telles que la fente longitudinale 19, visible sur les figures 4 et 5, qui découpe la partie active de la batte en deux bandes de largeur, et donc de raideur, plus faibles.

Les protubérances 16₁,17₁ portées par la surface 15 peuvent être en un matériau métallique ou élastique ou encore constituées par un mélange de protubérances de ces deux types. C'est ainsi que les protubérances 161 peuvent être constituées par des pointes métalliques alors que les protubérances 17₁ placées en aval sont constituées par des pointes en caoutchouc, moulées d'une pièce avec la batte, par exemple.

Les tubercules à effeuiller étant plantés en lignes parallèles à la direction F₁ d'avance du dispositif suivant l'invention, il convient que les outils de coupe tels que (6₁,13₁) montés sur le rotor soient groupés au niveau de chaque ligne de tubercules. Avantageusement, comme illustré à la figure 2, on peut grouper en adjacence plusieurs outils de manière, notamment, que les surfaces actives 15a,15b,15c des battes de ces outils s'étendent transversalement sur toute la surface de l'extrémité d'un tubercule 2ᵢ₊₁ en se modelant sur cette surface grâce à leur souplesse pour râper complètement les restes des pétioles encore attachées aux tubercules après la coupe des feuilles.

Pour solidariser un couteau et une batte de manière à constituer l'outil de coupe évoqué plus haut, l'invention propose de réaliser un embout 20 dans lequel sont passées les extrémités des manches du couteau 61 et de la batte 13₁ constituant l'essentiel de cet outil, cet embout 20 formant un moyen d'assemblage de ces manches.

Comme cela apparaît plus clairement sur la figure 5, cet embout 20 prend la forme d'une chape à deux joues 21₁,21₂ raccordée par une entretoise 22. Les joues sont percées d'ouvertures pour le passage de l'axe 9 qui retient le couteau 61 dans l'embout, en appui contre l'entretoise. Ces joues sont aussi percées d'ouvertures pour le passage d'un autre axe 23 traversant l'extrémité du manche 14 de la batte 13₁, ce manche étant coincé dans l'embout entre le manche 11 du couteau 6₁ et une goupille 24 montée sur les joues de l'embout 20.

Un même axe 9 peut traverser plusieurs outils ainsi constitués, pour les monter en adjacence entre deux oreilles 10₁,10₂ solidaires de l'arbre 5 du rotor, comme représenté à la figure 2. Ces outils sont ainsi facilement démontables par simple extraction de cet axe 9.

En fonctionnement, le dispositif décrit ci-dessus est monté sur un véhicule porteur (non représenté) qui assure son déplacement au-dessus des lignes de tubercules à effeuiller. La garde au sol du rotor peut être réglée par tout moyen convenable tel que des roues solidaires du carter (non représentées) du dispositif. Le rotor étant mis en rotation dans le sens de la flèche F₂ et translaté par le véhicule porteur dans le sens de la flèche F₁ (voir figure 1) parallèlement aux lignes de tubercules, il apparaît que les tubercules d'une même ligne sont successivement attaqués, en séquence, par le couteau de chaque outil de coupe et par la batte de râpage de cet outil, de manière à laisser sur le champ le tubercule "chauve" mais intact. Les feuilles enlevées des tubercules sont répandues sur le sol entre les lignes de tubercules qui sont ensuite arrachés du sol et récoltés, ou sur des parties adjacentes du champ, déjà récolté.

Il apparaît maintenant que l'invention permet bien d'atteindre le but annoncé, à savoir fournir un dispositif compact, à un seul rotor, pour effeuiller et supprimer tout "vert" sur des tubercules tels que des betteraves à sucre, avant la récolte de ceux-ci, de manière à supprimer, ou au moins à réduire, la "tare-feuilles" des tubercules à envoyer à l'usine. La compacité et le nombre de pièces réduit du dispositif en améliore le prix de revient de fabrication. On remarquera que l'amovibilité des outils de coupe et de nettoyage montés sur le dispositif selon l'invention en rend également l'entretien plus facile.

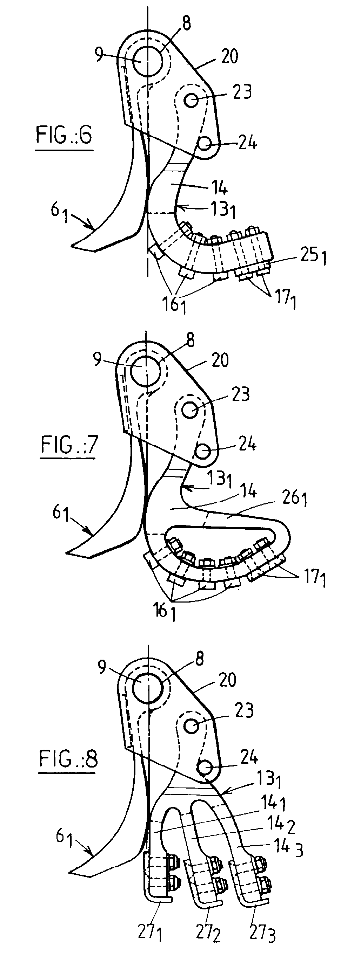

On a représenté aux figures 6 à 8 trois variantes de l'outil de coupe des figures 3 à 5, qui se distinguent essentiellement de ce dernier par la structure de la batte. Sur les figures 6 à 8 des références numériques identiques à des références utilisées sur les figures 3 à 5 repèrent des éléments ou organes identiques ou similaires.

Dans la variante de la figure 6, les protubérances 16₁ sont constituées par des inserts en forme de boulons traversant l'épaisseur de la batte 13₁. Les inserts 17₁ sont de même forme et serrent en outre une plaquette 25₁ contre la batte. De tels inserts sont faciles à remplacer quand ils sont usés.

Dans la variante de la figure 7, l'extrémité active de la batte 13₁ est renforcée par une entretoise 26₁ pontant la surface active de la batte. Les inserts 16₁ et 17₁ sont conformes à ceux de la figure 6.

Dans la variante de la figure 8, le manche 14 de la batte 13₁ se divise en plusieurs branches 14₁, 14₂, 14₃ déployées en éventail. Chaque branche porte un insert métallique 27₁, 27₂, 27 respectivement, à section en forme de L, enveloppant l'extrémité libre de la branche. L'insert est boulonné sur cette branche. Cette disposition accroît la souplesse du montage des inserts qui râpent successivement les tubercules.

Dans les 3 variantes des figures 6 à 8, le matériau choisi pour constituer la batte est un matériau élastique tel que du polyuréthane par exemple. L'extrémité active de la batte est avantageusement découpée d'une fente telle que la fente 19 du mode de réalisation des figures 3 à 5.

Bien entendu, l'invention n'est pas limitée aux modes de réalisation décrits et représentés qui n'ont été donnés qu'à titre d'exemple. C'est ainsi que ceux-ci pourraient être adaptés à l'effeuillage et au nettoyage de végétaux autres que des betteraves, par exemple des carottes.

## Revendications

1. Dispositif pour effeuiller des végétaux, tels que des betteraves, cultivés en lignes et pourvus d'une touffe de feuilles (4) s'étendant au-dessus d'un tubercule (2ᵢ,2ᵢ₊₁,2ᵢ₊₂) en saillie sur le sol, ce dispositif comportant un rotor (1) d'axe horizontal déplacé au-dessus du sol, parallèlement aux lignes de végétaux, le rotor étant muni d'une pluralité de couteaux (6₁,6₂) présentant chacun un bord de coupe (7) écarté de l'axe (X) du rotor (1) d'une distance prédéterminée pour couper lesdites feuilles (4) au niveau de leurs pétioles, ledit rotor (1) comprenant en outre des battes de râpage (13₁,13₂) associées chacune à un couteau (6₁,6₂) et présentant une surface active (15) écartée dudit axe (X) du rotor (1) d'une deuxième distance prédéterminée supérieure à la première, ladite surface active (15) étant agencée en aval du bord de coupe (7) dudit couteau (6₁,6₂) associé, dans le sens de rotation dudit rotor, de manière à passer sur un tubercule effeuillé immédiatement après le bord de coupe (7) du couteau (6₁,6₂) associé, pour enlever par râpage les restes (4a) des pétioles desdites feuilles demeurant sur le tubercule après la coupe, caractérisé en ce que chacune desdites battes (13₁,13₂) comprend un manche (14) incliné sur sa surface active (15) de manière à être orienté sensiblement radialement alors que ladite surface (15) est tangentielle, quand le rotor (1) tourne.

2. Dispositif conforme à la revendication 1, caractérisé en ce que ladite surface active (15) et ledit bord de coupe (7) du couteau associé se situent de part et d'autre d'un plan (P) sensiblement radial, quand le rotor (1) tourne.

3. Dispositif conforme à la revendication 2, caractérisé en ce que le couteau (6₁,6₂) présente un manche (11) et en ce que les manches (11,14) du couteau et de la batte sont accolés et assemblés l'un à l'autre.

4. Dispositif conforme à la revendication 3, caractérisé en ce que les extrémités des manches (11,14) du couteau et de la batte sont engagés dans un embout (20) commun qui les assemble, cet embout étant monté rotatif sur le rotor, autour d'un axe (9) parallèle et distant de celui du rotor.

5. Dispositif conforme à l'une quelconque des revendications 1 à 4, caractérisé en ce que chacune desdites battes (13₁,13₂) est réalisée en un matériau élastique.

6. Dispositif conforme à l'une quelconque des revendications 1 à 5, caractérisé en ce que ladite surface active (15) de ladite batte est garnie d'une distribution de protubérances (16₁,17₁).

7. Dispositif conforme à la revendication 6, caractérisé en ce que ladite distribution comprend des protubérances (16₁) réalisées en matériau métallique et/ou des protubérance (17₁) réalisées en matériau élastique.

8. Dispositif conforme à la revendication 7, caractérisé en ce que ladite distribution comprend des protubérance métalliques (16₁) et des protubérances élastiques (17₁), ces dernières étant disposées en aval des premières, dans le sens de rotation du rotor (1).

9. Dispositif conforme à l'une quelconque des revendications 6 à 8, caractérisé en ce que lesdites protubérances (16₁, 17₁) sont constituées par des inserts en forme de boulons traversant l'épaisseur de la batte (13₁, 13₂).

10. Dispositif conforme à la revendication 9, caractérisé en ce que l'extrémité active de la batte (13₁, 13₂) est renforcée par une entretoise (26₁) pontant la surface active de la batte.

11. Dispositif conforme à l'une quelconque des revendications 1 à 5, caractérisé en ce que le manche de la batte (13₁, 13₂) se divise en plusieurs branches (14₁, 14₂, 14₃) déployées en éventail et portant chacune un insert (27₁, 27₂, 27₃) de râpage.

12. Dispositif conforme à l'une quelconque des revendications 2 à 11, caractérisé en ce que la partie d'une batte qui comporte la surface active (15) présente au moins une fente longitudinale d'assouplissement (19).

13. Dispositif conforme à l'une quelconque des revendications précédentes, caractérisé en ce qu'il comprend plusieurs outils de coupe constitués chacun d'un couteau et d'une batte associée, ces outils étant accolés au niveau d'une ligne de tubercules (2ᵢ,2ᵢ₊₁,2ᵢ₊₂) de manière à couvrir complètement la surface de ceux-ci qui portent les feuilles.

14. Outil de coupe formant partie du dispositif conforme à l'une quelconque des revendications 2 à 13, caractérisé en ce qu'il comprend un couteau de coupe (6₁,6₂) et une batte de râpage (13₁,13₂) présentant tous deux un manche (11,14), un moyen d'assemblage (20) desdits manches et des moyens (9,10₁,10₂) pour monter à rotation ledit moyen d'assemblage (20) sur ledit rotor (1).
